# EUROPEAN PATENT APPLICATION

(11) **EP 4 722 009 A1**
(43) Date of publication of application: **08.04.2026**
(21) Application number: 24811025.6
(22) Date of filing: 16.05.2024
(51) Int. Cl.: B60J 1/10, B60R 13/04

(54) **VEHICULAR GLASS MODULE**

(30) Priority: 24.05.2023 JP 2023085385
(71) Applicant: Nippon Sheet Glass Company, Limited, Tokyo 108-6321 (JP)
(72) Inventor: FUJIWARA Kazuhiro, Tokyo 108-6321 (JP)
(74) Representative: McDonald, Christopher Ian
(86) International application number: PCT/JP2024/018125
(87) International publication number: WO 2024/242018

(57) **Abstract**

A vehicular glass module (10) includes: a glass sheet (1) having a first surface (14) facing outside of a vehicle and a second surface (15) facing inside of the vehicle; a first decorative member (31) disposed along at least part of an outer edge of the first surface (14) of the glass sheet (1) and formed of a non-magnetic material; a support member (22) disposed on an end surface of the glass sheet (1) and configured to support the first decorative member (31); a joining member (21) configured to join the glass sheet (1) to the support member (22); and a first fixing member (41) configured to fix the first decorative member (31) to the support member (22).

## Description

### Technical Field

The present invention relates to a vehicular glass module.

### Background Art

In high-end vehicles, for example, decorative members having a metallic luster or the like may be attached to the frame of a vehicle window glass. Patent Literature 1 discloses a decorative-member equipped vehicle window glass manufacturing method for attaching a decorative member (a "decorative trim" in Patent Literature 1) to a vehicle window glass.

In the decorative-member equipped vehicle window glass manufacturing method described in Patent Literature 1, an elongated decorative member is put on a lower mold of a metal mold including the lower mold and an upper mold, a glass sheet is put on the decorative member, and then, the upper mold is put thereon to close the metal mold. After that, a resin material is injected into the metal mold, so that a resin frame is formed integrally with the decorative member in a peripheral portion of the glass sheet.

### Citation List

### Patent Literature

Patent Literature 1: Japanese Unexamined Patent Application Publication No. 6-072144

### Summary of Invention

### Technical Problem

The attachment of some decorative members to glass sheets by resin insert molding may be difficult due to their raw materials or design-related problems. More specifically, in the case of a decorative member made of a non-magnetic material (resin, non-magnetic metal, or the like), the decorative member cannot be fixed to the metal mold by magnetic force. Because of this, it is necessary to press the decorative member by the metal mold, which might damage the decorative member. In the case of resin insert molding without pressing the decorative member by the metal mold, the decorative member cannot be fixed to the glass sheet at an appropriate position.

In view of this, there is a demand for vehicular glass modules that can achieve easy fixation of a decorative member that is unsuitable for resin insert molding.

### Solution to Problem

A feature configuration of a vehicular glass module according to the present invention is that the vehicular glass module includes: a glass sheet having a first surface facing outside of a vehicle and a second surface facing inside of the vehicle; a first decorative member disposed along at least part of an outer edge of the first surface of the glass sheet and formed of a non-magnetic material; a support member disposed on an end surface of the glass sheet and configured to support the first decorative member; a joining member configured to join the glass sheet to the support member; and a first fixing member configured to fix the first decorative member to the support member.

In this configuration, in the vehicular glass module, the first decorative member formed of a non-magnetic material is disposed along at least part of the outer edge of the first surface of the glass sheet which first surface faces the outside of the vehicle, the support member that supports the first decorative member is joined to the glass sheet by the joining member, and the first fixing member for fixing the first decorative member to the support member is provided. Accordingly, in the vehicular glass module, the first decorative member, disposed along the outer edge of the glass sheet and formed of a non-magnetic material, can be fixed to the support member only by the first fixing member without resin insert molding. Thus, the vehicular glass module according to this configuration can achieve easy fixation of the first decorative member that is unsuitable for resin insert molding.

Another feature configuration may be that the first fixing member is a fastener concealed from an outer surface of the first decorative member.

With this configuration in which the first fixing member is a fastener concealed from the outer surface of the first decorative member, it is possible to improve the appearance of the first decorative member in the vehicular glass module.

Another feature configuration may be that the fastener is a rivet disposed in an intermediate region between opposite end portions of the first decorative member in a longitudinal direction of the first decorative member.

In the vehicular glass module, in a case where the first decorative member is fixed along the outer edge of the glass sheet, the region between the opposite end portions of the first decorative member in the longitudinal direction is disposed along the outer edge of the glass sheet. In this case, the arrangement region for the first decorative member and the support member in a portion of the vehicular glass module along the outer edge of the glass sheet is a glass-sheet occupied region spaced apart from pillars and therefore has a narrow width. In the above configuration in which the first fixing member (the fastener) is a rivet disposed in the intermediate region between the opposite end portions of the first decorative member in the longitudinal direction, even if a fixation width for fixing the first decorative member by the first fixing member is small, the first decorative member can be fixed to the support member. Accordingly, with this configuration, the first decorative member that is unsuitable for resin insert molding can be surely fixed to the support member by the first fixing member.

Another feature configuration may be that the first decorative member has a gap having a U-shaped section, and the rivet extends through the support member, the joining member, and the first decorative member and includes a locking section flattened in the gap.

In this configuration in which the first decorative member has a gap having a U-shaped section, and the rivet extends through the support member, the joining member, and the first decorative member and includes the locking section flattened in the gap, the locking section is accommodated in the gap having a U-shaped section with the first fixing member concealed on the surface of the first decorative member in the vehicular glass module. Hereby, the vehicular glass module can easily avoid a decrease in decorativeness due to the first fixing member, thereby making it possible to enhance a sense of quality by effectively using the surface of the first decorative member.

Another feature configuration may be that the vehicular glass module further includes second fixing members configured to fix the first decorative member to the support member by a fixing mechanism different from the first fixing member.

With this configuration in which the vehicular glass module further includes the second fixing members having a fixing mechanism different from the first fixing member and configured to fix the first decorative member to the support member, the first decorative member can be surely fixed by a plurality of fixing members selected appropriately.

Another feature configuration may be that the second fixing members are disposed at opposite ends of the first decorative member in a longitudinal direction of the first decorative member, and the first fixing member is disposed in an intermediate region of the first decorative member between the opposite ends of the first decorative member.

In the vehicular glass module, in a case where the first decorative member is fixed along the outer edge of the glass sheet, when the support member is extended from the outer edge of the glass sheet in a direction along the sheet surface of the glass sheet, for example, the support member can have a large width at the opposite end portions of the first decorative member in the longitudinal direction. In the meantime, the region between the opposite end portions of the first decorative member in the longitudinal direction is a glass-sheet occupied region spaced apart from pillars and therefore has a narrow width.

In view of this, in the present configuration, the second fixing members are disposed at the opposite end portions of the first decorative member in the longitudinal direction, and the first fixing member is disposed in the region between the opposite end portions of the first decorative member. Since the first decorative member is fixed to the support member with the use of different fixing members for the opposite end portions of the first decorative member in the longitudinal direction and the intermediate region between the opposite end portions, a suitable fixing member can be selected for each fixing position in the first decorative member.

Another feature configuration may be that the first fixing member and the second fixing members are mounted to the support member in different orientations.

In this configuration in which the first fixing member and the second fixing members are mounted to the support member in different orientations, the first fixing member can be mounted in an orientation parallel to the sheet surface of the glass sheet, and the second fixing members can be mounted in an orientation perpendicular to the sheet surface of the glass sheet, for example. Hereby, the first decorative member can be fixed to the support member in the vehicular glass module with an appropriate combination of the first fixing member and the second fixing members selected in accordance with the positional relationship between the support member and the first decorative member.

Another feature configuration may be that the joining member includes a projection to be in close contact with a distal end of the first decorative member.

In the vehicular glass module according to this configuration, the joining member includes the projection to be in close contact with the distal end of the first decorative member, and this makes it possible to easily position the first decorative member in the vehicular glass module by use of the projection of the joining member. Besides, by bringing the joining member into contact with the first decorative member, the joining member, which is more flexible than the support member in general, can prevent damage for the first decorative member.

Another feature configuration may be that the vehicular glass module further includes a second decorative member disposed along at least part of the outer edge of the first surface of the glass sheet and positioned apart from the first decorative member.

With this configuration in which the second decorative member is provided for the outer edge of the glass sheet, at the position apart from the first decorative member, in addition to the first decorative member, it is possible to enhance the sense of quality of the vehicular glass module.

Another feature configuration may be that the second decorative member is formed of a magnetic substance and is integrated with the glass sheet by insert-molded resin.

With this configuration in which the second decorative member is formed of a magnetic substance, and the second decorative member is formed integrally with the glass sheet by insert-molded resin, the second decorative member can be surely fixed to the outer edge of the glass sheet in the vehicular glass module.

Another feature configuration may be that the second decorative member is in a hollow shape including a top surface portion and a side wall portion extended toward the second surface from an outer edge of the top surface portion, the side wall portion has a distal end region tapered along the outer edge of the glass sheet and has a hole on a distal end surface of the distal end region which hole is connected to a hollow portion of the second decorative member.

In the vehicular glass module, in a case where the second decorative member including the top surface portion and the side wall portion is disposed along the outer edge of the glass sheet, and the second decorative member is integrated with the glass sheet by insert-molded resin, molten resin may stay on the distal end of the second decorative member at the time of molding, so that the distal end of the second decorative member may be widely covered with insert-molded resin. In this case, a region decorated by the second decorative member becomes small in the vehicular glass module. In contrast, in the present configuration in which the distal end region is tapered along the longitudinal direction, and the hole connected to the hollow portion of the second decorative member is formed in the distal end region along the longitudinal direction, molten resin circulates through the hole formed in the distal end region of the second decorative member during insert molding. Hereby, molten resin to stay in the distal end region of the second decorative member during insert molding can be reduced, thereby making it possible to secure a large region to be decorated by the second decorative member in the vehicular glass module. Besides, it is also possible to effectively suppress the weld line (a fusion defect phenomenon) that tends to occur at the convergence point of molten resin during insert molding, because the molten resin to stay in the distal end region decreases.

As a result, the sense of quality of the vehicular glass module by the second decorative member can be further enhanced.

### Brief Description of Drawings

Fig. 1 is a view illustrating the vicinity of a front portion of a vehicle to which a vehicular glass module is attached;
Fig. 2 is a plan view illustrating the vehicular glass module viewed from outside the vehicle;
Fig. 3 is a partial perspective view illustrating the vehicular glass module viewed from inside the vehicle and also illustrating the lower surface thereof;
Fig. 4 is a partial exploded perspective view of the vehicular glass module;
Fig. 5 is a sectional view taken along an arrow V-V in Fig. 3;
Fig. 6 is a sectional view taken along an arrow VI-VI in Fig. 3;
Fig. 7 is a sectional view taken along an arrow VII-VII in Fig. 3; and
Fig. 8 is a perspective view of a distal end region of a second decorative member.

### Description of Embodiments

The following describes embodiments of a vehicular glass module according to the present invention with reference the drawings. The present embodiment deals with a glass module applied to a fixed window in the front portion of a vehicle, as one example of the vehicular glass module. However, the present invention is not limited to the following embodiments and can be variously modified without departing from the gist of the present invention.

The following describes an embodiment in which a vehicular glass module 10 is applied to the fixed window of the front portion of the vehicle.

### [First Embodiment]

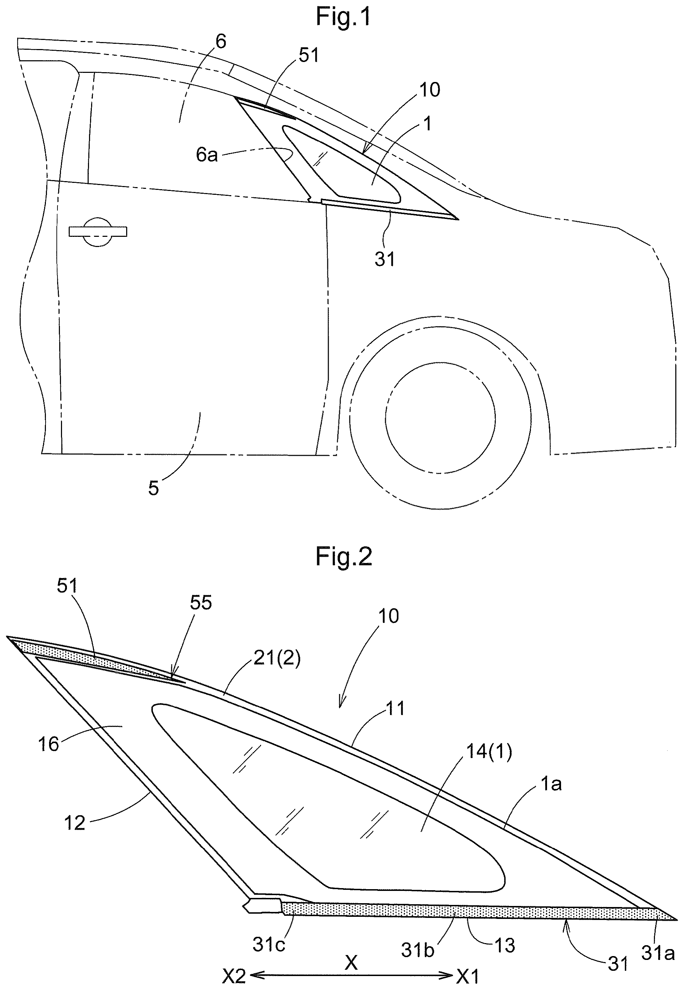

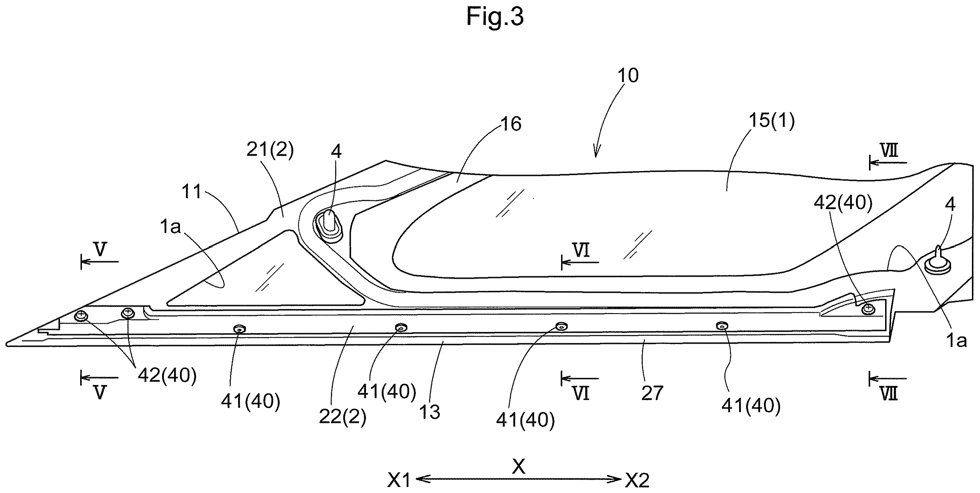

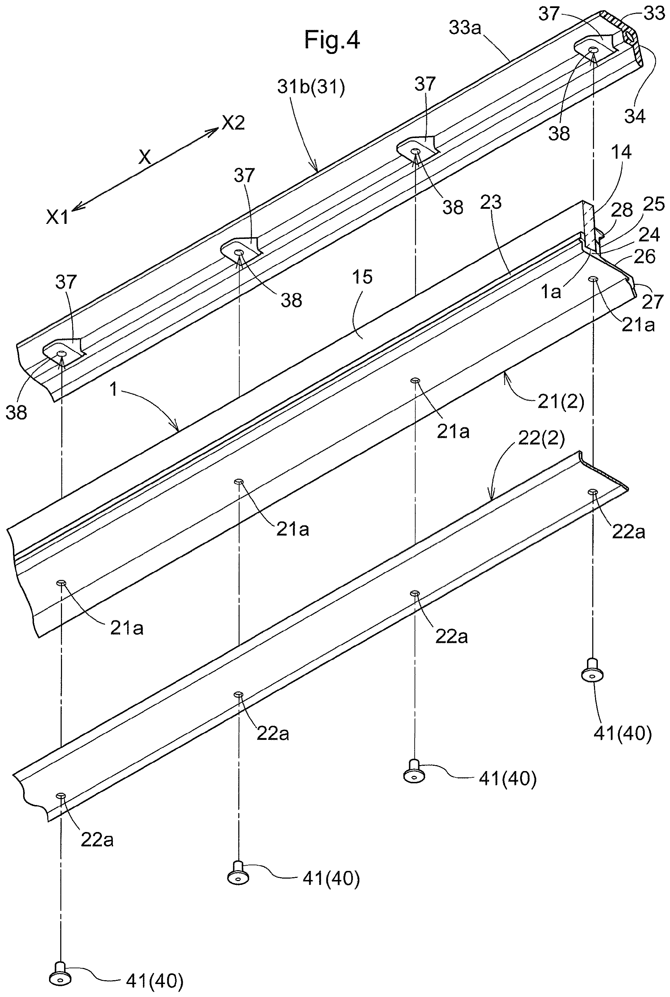

The following describes embodiments of a first embodiment of the vehicular glass module 10 according to the present invention with reference the drawings. Fig. 1 is a view illustrating the vicinity of the front portion of a vehicle to which the vehicular glass module 10 according to the present embodiment is attached. Fig. 2 is a plan view illustrating the vehicular glass module 10 viewed from outside the vehicle. Fig. 3 is a partial perspective view illustrating the vehicular glass module 10 viewed from inside the vehicle, and the lower surface thereof. Fig. 4 is a partial exploded perspective view of an intermediate region of the vehicular glass module 10 in the vehicle-body front-rear direction.

As illustrated in Fig. 1, the vehicular glass module 10 (hereinafter referred to as the "glass module 10") serves as a fixed window adjacent to a window glass 6 of a front door 5 on a lateral surface of the body of the vehicle, for example. More specifically, the window glass 6 of the front door 5 is formed into a rectangular shape, and a front edge 6a of the window glass 6 is adjacent to the glass module 10.

An attachment recess (not illustrated) to which the glass module 10 having a triangular shape is attached is formed in a lateral portion of the body. The attachment recess is formed into a triangular shape to correspond to the shape of the glass module 10. One edge of the attachment recess is adjacent to the front edge 6a of the window glass 6, the other edge thereof is adjacent to the body of the vehicle, and the oblique side thereof is adjacent to an A-pillar.

As illustrated in Figs. 2, 3, the glass module 10 includes a glass sheet 1, a window assembly 2 attached along a peripheral edge 1a of the glass sheet 1, and a clip 4 (a temporary fixing member) for temporarily fixing the glass module 10 to the attachment recess.

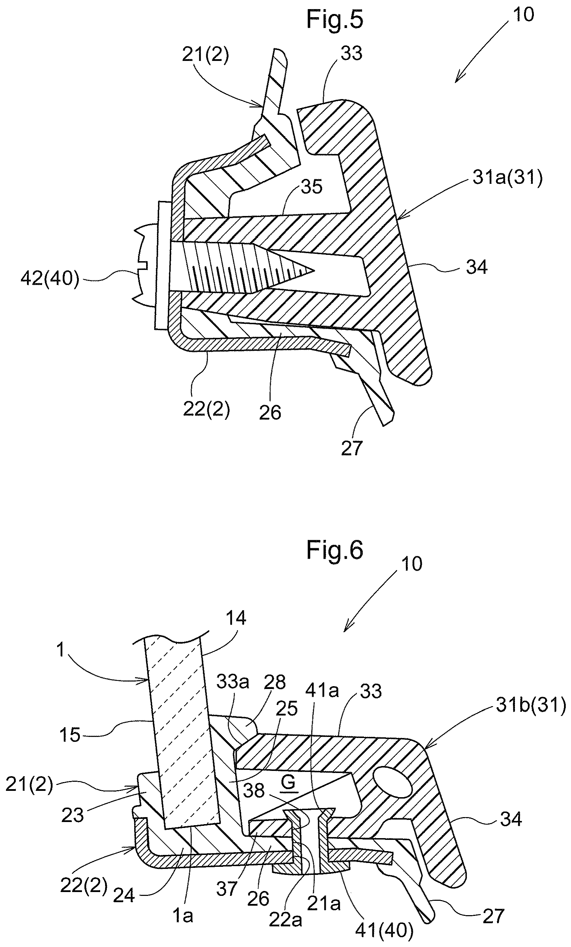

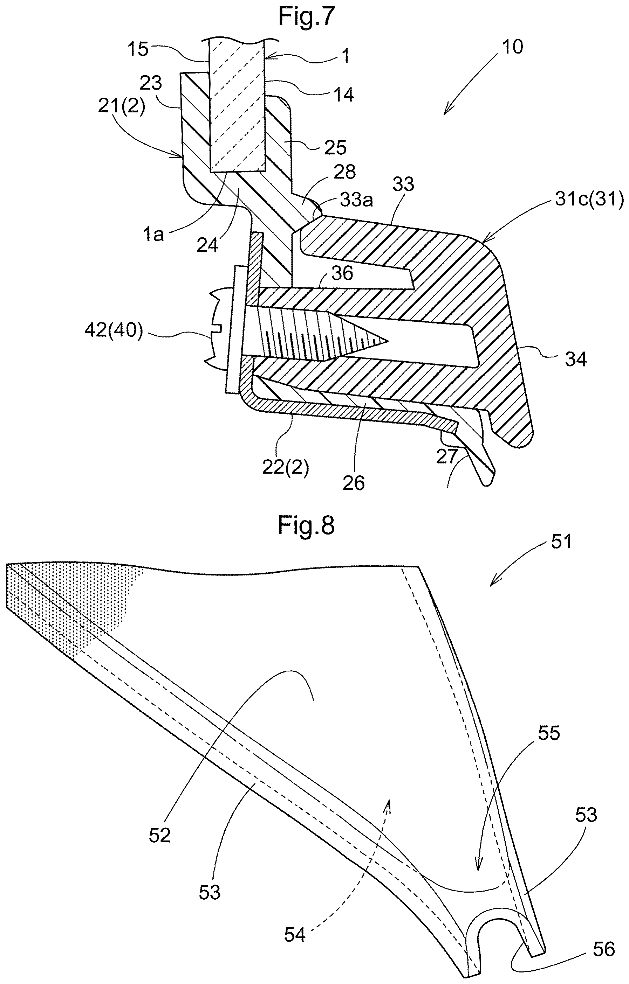

The glass module 10 is formed into a triangular shape with an upper edge 11, a rear edge 12, and a lower edge 13 as the outline of the glass module 10. The upper edge 11 curves and inclines downward as it goes forward. The rear edge 12 faces the front edge 6a of the window glass 6 of the front door 5 and is formed into a straight shape inclined toward the vehicle front side. The lower edge 13 is formed generally horizontally along the front-rear direction of the vehicle. The glass sheet 1 has a first surface 14 facing outside of the vehicle and a second surface 15 facing inside of the vehicle (see Figs. 6, 7).

Well-known glass sheets can be used for the glass sheet 1, such as heat absorbing glass, general transparent glass or green glass, UV green glass, or laminated glass including two or more panes of glass attached via an intermediate film (a resin film).

The thickness of the glass sheet 1 according to the present embodiment is not limited in particular, but is preferably 2.0 mm to 7.0 mm, and further preferably 2.3 mm to 5.0 mm.

A masking layer 16 formed of ceramic having a dark color such as black is laminated on the peripheral edge 1a of the glass sheet 1. The masking layer 16 blocks the field of vision from inside or outside the vehicle and is laminated on the inner surface of the glass sheet 1 along three edges thereof. The masking layer 16 can be formed of various types of materials such as ceramic. The masking layer 16 can be formed by laminating ceramic or by attaching a shielding film made of resin and having a dark color.

The window assembly 2 fills the gap between the glass sheet 1 and the body. As illustrated in Fig. 3, the window assembly 2 includes a joining member 21 formed along the peripheral edge 1a of the glass sheet 1, and a support member 22 (see Fig. 5) disposed on the outer surface of the joining member 21. As described above, the masking layer 16 is laminated on the peripheral edge 1a of the glass sheet 1, but the window assembly 2 is attached to the peripheral edge 1a of the glass sheet 1 with a width smaller than the width (a length directed inward from the bottom edge of the glass sheet 1) of the masking layer 16. More specifically, as illustrated in Figs. 6, 7, the joining member 21 of the window assembly 2 has a section including a belt-shaped inner portion 23 along the inner surface of the glass sheet 1, a belt-shaped outer portion 25 along the outer surface of the glass sheet 1, and a coupling portion 24 extending along the end surface of the glass sheet 1 to couple the inner portion 23 with the outer portion 25, so as to sandwich the peripheral edge 1a of the glass sheet 1. Thus, the joining member 21 of the window assembly 2 has an overall U-shaped sectional shape. Note that the inner portion 23 is disposed on the masking layer 16. Note that, in Figs. 6 and 7, the masking layer 16 is omitted.

The thickness of the joining member 21, that is, the thickness of the glass sheet 1 in its thickness direction, is preferably 1 mm to 10 mm, and further preferably 1 mm to 5 mm.

When the glass module 10 is attached to the body, the peripheral edge 1a of the glass sheet 1 is fixed to the opening of the attachment recess by adhesive or the like, so that the glass sheet 1 covers the opening.

The material to form the joining member 21 is not limited in particular, and the joining member 21 can be formed by well-known methods such as injection molding by use of PVC (polyvinyl chloride) or urethane, for example. Alternatively, the joining member 21 can be formed of TPO (thermoplastic olefinic elastomer), EPDM (ethylene-propylene-diene copolymer rubber), or the like, for example. The joining member 21 is formed by insert molding continuously over the outer peripheries of the upper edge 11, the rear edge 12, and the lower edge 13 of the glass sheet 1, for example.

As illustrated in Figs. 5 to 7, the joining member 21 includes a first extension 26 extended outward of the vehicle, and a second extension 27 extended obliquely downward continuously from the first extension 26. The support member 22 configured to support a first decorative member 31 (described later) is formed integrally with the outer surface of a lower portion (the first extension 26) of the joining member 21, including the inner portion 23 and the coupling portion 24. That is, the joining member 21 and the support member 22 are formed by insert molding. In a case where the support member 22 is formed of a material that is unsuitable for insert molding, for example, the support member 22 may be fastened to the joining member 21 instead of insert molding.

As illustrated in Fig. 2 and Figs. 4 to 7, the first decorative member 31 is attached to the outer surface of the glass module 10 along the lower edge 13. The material to form the first decorative member 31 is not limited in particular, but the first decorative member 31 can be formed of a non-magnetic material such as a resin material, for example.

The first decorative member 31 is attached to the joining member 21 and the support member 22 by fixing members 40 (a first fixing member 41 and a second fixing member 42) (described later).

As illustrated in Figs. 2, 4, the first decorative member 31 has a bar shape, includes an upper surface portion 33 and a lateral surface portion 34 as portions exposed to outside the vehicle, and extends in a vehicle front-rear direction X. The first decorative member 31 includes a front end portion 31a on an X1-side, a rear end portion 31c on an X2-side, and an intermediate region 31b between the front end portion 31a and the rear end portion 31c. The first decorative member 31 is disposed such that the front end portion 31a and the rear end portion 31c are outward of the peripheral edge 1a of the glass sheet 1, and the intermediate region 31b is along the peripheral edge 1a of the glass sheet 1.

In the first decorative member 31, the front end side (the X1-side) of the inner surface of the lateral surface portion 34 in the vehicle front-rear direction X is provided with a first tubular portion 35 projecting toward the inside of the vehicle, as illustrated in Fig. 5, and the rear end side (the X2-side) thereof in the vehicle front-rear direction X is provided with a second tubular portion 36 projecting toward the inside of the vehicle as illustrated in Fig. 7. In the present embodiment, two first tubular portions 35 are provided on the inner surface of the front end portion 31a, and one second tubular portion 36 is provided on the inner surface of the rear end portion 31c.

In the first decorative member 31, a portion (the intermediate region 31b) of the inner surface of the lateral surface portion 34, other than the end portions 31a, 31c thereof in the vehicle front-rear direction X, is provided with a plurality of protrusions 37 disposed dispersedly along the vehicle front-rear direction X. The protrusions 37 have a plate shape and are provided along the upper surface portion 33. Each of the protrusions 37 has a through-hole 38. The joining member 21 and the support member 22 have holes 21a, 22a at respective positions corresponding to the through-holes 38.

As illustrated in Figs. 3, 5, in the front end portion 31a, on the X1-side, of the first decorative member 31, the second fixing member 42 is attached to the first tubular portion 35 from the inside of the vehicle through the joining member 21 and the support member 22.

In the present embodiment, the second fixing member 42 is a screw member, and the front end portion 31a of the first decorative member 31 is fixed to the support member 22 by the screw member.

As illustrated in Figs. 3, 6, in the intermediate region 31b of the first decorative member 31, the first fixing member 41 is attached to the protrusion 37 of the first decorative member 31 from the lower side through the joining member 21 and the support member 22. In the present embodiment, the first fixing member 41 is a rivet disposed in the intermediate region 31b between the end portions 31a, 31c of the first decorative member 31 in its longitudinal direction (the vehicle front-rear direction X). The rivet (the first fixing member 41, an example of a fastener) extends from the support member 22 to the first decorative member 31. Hereby, the intermediate region 31b of the first decorative member 31 is fixed to the support member 22 by the rivet (the first fixing member 41). Various method for mounting the rivet are considerable, but the rivet may be attached in such a manner that a jig is attached to a hollow area of the rivet, and the jig is pulled outward to flatten the distal end of the rivet to form a locking section 41a.

In the present embodiment, in the glass module 10, the first decorative member 31 formed of a non-magnetic material is disposed along at least part of the outer edge of the first surface 14 of the glass sheet 1 which first surface 14 faces the outside of the vehicle, the support member 22 for supporting the first decorative member 31 is joined to the glass sheet 1 by the joining member 21, and the first fixing member 41 for fixing the first decorative member 31 to the support member 22 is provided. Accordingly, in the glass module 10, the first decorative member 31, disposed along the outer edge of the glass sheet 1 and formed of a non-magnetic material, can be fixed to the support member 22 only by the first fixing member 41, instead of fixing the first decorative member 31 by insert-molded resin. Thus, in the present embodiment, the glass module 10 can achieve easy fixation of the first decorative member 31 that is unsuitable for resin insert molding.

Besides, the first fixing member 41 is a fastener concealed from the outer surface of the first decorative member 31. This makes it possible to improve the appearance of the first decorative member 31 in the glass module 10.

In the glass module 10, in a case where the first decorative member 31 is fixed along the outer edge of the glass sheet 1, the intermediate region 31b between the end portions 31a, 31c of the first decorative member 31 in the longitudinal direction is disposed along the outer edge of the glass sheet 1. In this case, the arrangement region for the first decorative member 31 and the support member 22 in a portion of the glass module 10 along the outer edge of the glass sheet 1 is a glass-sheet occupied region spaced apart from pillars and therefore has a narrow width. In the present embodiment in which the first fixing member 41 is a rivet disposed in the intermediate region 31b of the first decorative member 31, even if a fixation width for fixing the first decorative member 31 by the first fixing member 41 is small, the first decorative member 31 can be fixed to the support member 22.

Accordingly, with the present embodiment, the first decorative member 31 that is unsuitable for resin insert molding can be surely fixed to the support member 22 by the rivet as the first fixing member 41.

The first decorative member 31 has a gap G having a U-shaped section due to the upper surface portion 33, the lateral surface portion 34, and the protrusion 37. The rivet (the first fixing member 41) extends through the support member 22, the joining member 21, and the protrusion 37 of the first decorative member 31, and the locking section 41a that is flattened is disposed in the gap G. Hereby, in the glass module 10, the first decorative member 31 can be fixed by the first fixing member 41 with the first fixing member 41 concealed from the surface of the first decorative member 31. As a result, the glass module 10 can easily avoid a decrease in decorativeness due to the first fixing member 41, thereby making it possible to enhance a sense of quality by effectively using the surface of the first decorative member 31.

As illustrated in Figs. 3, 7, in the rear end portion 31c on the X2-side in the vehicle front-rear direction X, the screw member (the second fixing member 42) is attached to the second tubular portion 36 of the first decorative member 31 from the inside of the vehicle through the joining member 21 and the support member 22. In the present embodiment, similarly to the front end portion 31a, the rear end portion 31c of the first decorative member 31 is also fixed to the support member 22 by the screw member (the second fixing member 42).

As described above, the glass module 10 includes the rivet (the first fixing member 41), and the screw member (the second fixing member 42) configured to fix the first decorative member 31 to the support member 22 by a fixing mechanism different from the rivet (the first fixing member 41). Hereby, in the glass module 10, the first decorative member 31 can be fixed by a plurality of fixing members selected appropriately.

In the glass module 10, the support member 22 is extended from the outer edge of the glass sheet 1 in the direction along the sheet surface of the glass sheet, and the end portions 31a, 31c of the first decorative member 31 in the longitudinal direction are fixed by the screw members (the second fixing members 42) to their corresponding extensions of the support member 22. In the meantime, it is necessary that the intermediate region 31b of the first decorative member 31, between the end portions 31a, 31c in the longitudinal direction, be fixed to the support member 22 disposed along the outer edge of the glass sheet 1, and the support member 22 along the outer edge of the glass sheet 1 has a narrow width. In view of this, in the present embodiment, the first fixing member 41 in the form of a rivet is disposed in the intermediate region 31b of the first decorative member 31. As described above, the first decorative member 31 is fixed to the support member 22 with the use of different fixing members for the end portions 31a, 31c and the intermediate region 31b of the first decorative member 31 in the longitudinal direction, so that a suitable fixing member can be selected for each fixing position in the first decorative member 31.

The rivet (the first fixing member 41) is mounted to the support member 22 in the vehicle up-down direction. In the meantime, the screw member (the second fixing member 42) is mounted to the support member 22 in the vehicle right-left direction. That is, the first fixing member 41 and the second fixing member 42 are attached to the support member 22 in different orientations. Since the first fixing member 41 and the second fixing member 42 are mounted to the support member 22 in different orientations, the first decorative member 31 can be fixed to the support member 22 in the glass module 10 with an appropriate combination of the first fixing member 41 and the second fixing member 42 selected in accordance with the positional relationship between the support member 22 and the first decorative member 31.

As illustrated in Figs. 6, 7, the joining member 21 includes a projection 28 to be in close contact with the distal end of the first decorative member 31. More specifically, the joining member 21 includes the projection 28 at an upper position facing an end portion 33a (one example of the distal end of the first decorative member 31) of an upper surface portion 33 of the first decorative member 31. Hereby, at the time when the first decorative member 31 is fixed to the joining member 21 and the support member 22, the projection 28 of the joining member 21 comes into close contact with the end portion 33a of the first decorative member 31. Since the projection 28 to be in close contact with the distal end of the first decorative member 31 is formed in the joining member 21, the first decorative member 31 can be easily positioned in the glass module 10 by use of the projection 28 of the joining member 21. Besides, by bringing the joining member 21 into contact with the first decorative member 31, it is possible to prevent damage for the first decorative member 31 by the joining member 21, which is more flexible than the support member 22.

As illustrated in Fig. 2, a second decorative member 51 is attached to the joining member 21 on the outer surface of the glass module 10, along the upper side of the upper edge 11. The material to form the second decorative member 51 is not limited in particular, but the second decorative member 51 can be formed of a magnetic material such as metal, for example.

The second decorative member 51 is attached to the joining member 21 by insert molding, for example.

The second decorative member 51 is disposed along at least part of the outer edge of the first surface 14 of the glass sheet 1 and positioned apart from the first decorative member 31. The second decorative member 51 is formed of a magnetic substance and integrated with the glass sheet 1 by the joining member 21 formed of insert-molded resin.

Since the second decorative member 51 is provided for the outer edge of the glass sheet 1, at the position spaced apart from the first decorative member 31, in addition to the first decorative member 31, the sense of quality of the glass module 10 can be further enhanced. Besides, the second decorative member 51 is formed of a magnetic substance, and when the second decorative member 51 is formed integrally with the glass sheet 1 by insert-molded resin with the second decorative member 51 being adsorbed onto a metal mold, the second decorative member 51 can be easily fixed to the outer edge of the glass sheet 1 in the glass module 10.

As illustrated in Figs. 2, 8, the second decorative member 51 is formed in a hollow shape including a top surface portion 52, and a side wall portion 53 extended toward the second surface 15 from the outer edge of the top surface portion 52. That is, the second decorative member 51 has a hollow portion 54 surrounded by the top surface portion 52 and the side wall portion 53. The side wall portion 53 has a distal end region 55 tapered along the outer edge of the glass sheet 1 and has a hole 56 formed on a distal end surface of the distal end region 55 and connected to the hollow portion 54 of the second decorative member 51.

In a conventional vehicular glass module, in a case where a decorative member including a top surface portion and a side wall portion is disposed along the outer edge of a glass sheet, and the decorative member is integrated with the glass sheet by insert-molded resin, molten resin may stay on the distal end of the decorative member at the time of molding, so that the distal end of the decorative member may be widely covered with insert-molded resin. In this case, a region decorated by the decorative member becomes small in the vehicular glass module. In contrast, in the present embodiment in which the distal end region 55 of the second decorative member 51 is tapered along the longitudinal direction, and the hole 56 connected to the hollow portion 54 of the second decorative member 51 is formed in the distal end region 55 along the longitudinal direction, molten resin circulates through the hole 56 formed in the distal end region 55 of the second decorative member 51 during insert molding. Hereby, molten resin to stay in the distal end region 55 of the second decorative member 51 during insert molding can be reduced, thereby making it possible to secure a large region to be decorated by the second decorative member 51 in the glass module 10. Besides, it is also possible to effectively suppress the weld line (a fusion defect phenomenon) that tends to occur at the convergence point of molten resin during insert molding, because the molten resin to stay in the distal end region 55 decreases. As a result, the sense of quality of the glass module 10 by the second decorative member 51 can be further enhanced.

### [Other Embodiments]

(1) The above embodiment has described an example in which the glass sheet 1 has a triangular shape. However, the glass sheet 1 may have a shape other than the triangular shape and may have various shapes, such as other polygonal shapes and a circular shape.
(2) The above embodiment has described an example in which the glass module 10 includes the first decorative member 31 and the second decorative member 51. However, the glass module 10 may include only one of the first decorative member 31 and the second decorative member 51. The positions of the first decorative member 31 and the second decorative member 51 in the glass module 10 are not limited to the above embodiment and may be changed appropriately.
(3) The first fixing member 41 and the second fixing member 42 are just examples. The first fixing member 41 may be a fastener other than the rivet, and the second fixing member 42 may be a fastener other than the screw member.
(4) The above embodiment has described an example in which the glass module 10 is disposed forward of the window glass 6 of the front door 5. However, the position of the glass module 10 may be other positions, e.g., behind a window glass of a rear door.

### Industrial Applicability

The present invention is widely applicable to vehicular glass modules.

### Description of Reference Numerals

1: glass sheet
1a: peripheral edge
10: glass module (vehicular glass module)
14: first surface
15: second surface
21: joining member
22: support member
28: projection
31: first decorative member
31a: front end portion
31b: intermediate region
31c: rear end portion
40: fixing member
41: rivet (first fixing member)
41a: locking section
42: screw member (second fixing member)
51: second decorative member
52: top surface portion
53: side wall portion
54: hollow portion
55: distal end region
56: hole
G: gap
X: vehicle front-rear direction

## Claims

1. A vehicular glass module, comprising:
a glass sheet having a first surface facing outside of a vehicle and a second surface facing inside of the vehicle;
a first decorative member disposed along at least part of an outer edge of the first surface of the glass sheet and formed of a non-magnetic material;
a support member disposed on an end surface of the glass sheet and configured to support the first decorative member;
a joining member configured to join the glass sheet to the support member; and
a first fixing member configured to fix the first decorative member to the support member.

2. The vehicular glass module according to claim 1, wherein
the first fixing member is a fastener concealed from an outer surface of the first decorative member.

3. The vehicular glass module according to claim 2, wherein
the fastener is a rivet disposed in an intermediate region between opposite end portions of the first decorative member in a longitudinal direction of the first decorative member.

4. The vehicular glass module according to claim 3, wherein
the first decorative member has a gap having a U-shaped section, and
the rivet extends through the support member, the joining member, and the first decorative member and includes a locking section flattened in the gap.

5. The vehicular glass module according to any one of claims 1 to 4, further comprising:
second fixing members configured to fix the first decorative member to the support member by a fixing mechanism different from the first fixing member.

6. The vehicular glass module according to claim 5, wherein
the second fixing members are disposed at opposite end portions of the first decorative member in a longitudinal direction of the first decorative member, and
the first fixing member is disposed in an intermediate region of the first decorative member between the opposite end portions of the first decorative member.

7. The vehicle glass module according to claim 5 or 6, wherein
the first fixing member and the second fixing members are mounted to the support member in different orientations.

8. The vehicular glass module according to any one of claims 1 to 7, wherein
the joining member includes a projection to be in close contact with a distal end of the first decorative member.

9. The vehicular glass module according to any one of claims 1 to 8, further comprising:
a second decorative member disposed along at least part of the outer edge of the first surface of the glass sheet and positioned apart from the first decorative member.

10. The vehicular glass module according to claim 9, wherein
the second decorative member is formed of a magnetic substance and is integrated with the glass sheet by insert-molded resin.

11. The vehicle glass module according to claim 9 or 10, wherein
the second decorative member is in a hollow shape including a top surface portion and a side wall portion extended toward the second surface from an outer edge of the top surface portion, and
the side wall portion has a distal end region tapered along the outer edge of the glass sheet and has a hole on a distal end surface of the distal end region which hole is connected to a hollow portion of the second decorative member.
